# EUROPEAN PATENT APPLICATION

(11) **EP 4 643 815 A1**
(43) Date of publication of application: **05.11.2025**
(21) Application number: 23912703.8
(22) Date of filing: 14.12.2023
(51) Int. Cl.: A61C 13/02, B23K 26/352, C23F 1/16, A61C 8/00

(54) **DENTAL IMPLANT SURFACE TREATMENT METHOD AND DENTAL IMPLANT SURFACE-TREATED THEREBY**

(30) Priority: 30.12.2022 KR 20220190370
(71) Applicant: Osstem Implant Co., Ltd., Gangseo-gu Seoul 07789 (KR)
(72) Inventor: KIM, Kyung Il, Seoul 07705 (KR); RHO, Keon Ho, Gwacheon-si, Gyeonggi-do 13834 (KR); PARK, Jae Jun, Gimpo-si, Gyeonggi-do 10130 (KR)
(74) Representative: Germain Maureau
(86) International application number: PCT/KR2023/020708
(87) International publication number: WO 2024/144028

(57) **Abstract**

A method of treating a surface of a dental implant to provide roughness to the surface is disclosed. The dental implant surface treatment method according to the present invention may comprise: a first surface treatment step of forming grooves in a regular pattern on an entirety or a part of the implant surface by using a laser; and a second surface treatment step of providing roughness to the grooves and the peripheries of the grooves through acid etching. The first surface treatment step may include: a primary laser processing process of processing a plurality of first grooves that are continuous in a first direction and spaced apart in a second direction; and a secondary laser processing process of processing a plurality of second grooves that are continuous in the second direction and spaced apart in the first direction to form a crater at each intersection of the first groove and the second groove.

## Description

### [Technical Field]

The present invention relates to a method of treating a surface of a dental implant and a dental implant surface-treated by the method.

### [Background Art]

Dental implants originally mean substitutes for restoring human tissues when the human tissues are lost, but mean artificially made teeth in the dentistry. An implant procedure is widely used as a replacing procedure that may restore or reconstruct original functions of teeth when the teeth are lost or functions of the teeth are degraded.

An important point in a dental implant procedure is how well a placed implant is integrated with a bone to form a fixing force. This is called osseointegration characteristics, and excellent osseointegration characteristics may allow the implant and the bone to be permanently coupled after initial stability is achieved by fixing the implant to the bone.

The osseointegration characteristics are closely related to a surface area of the dental implant. This is because a fixing force is increased due to an increase in an osseointegration area as the surface area is increased. In a dental implant field, a method of increasing the surface area by properly treating a surface of the dental implant to provide roughness is generally used. Blasting treatment or etching treatment using acid is known as a surface treatment method that provides roughness to a surface of the dental implant.

A process of providing the roughness by spraying amorphous ceramic powders such as Al₂O₃ and TiO₂ at a high pressure onto a surface of a machined dental implant is the blasting treatment, and since the residues or burrs remaining on the surface of the dental implant may cause problems when only the blasting treatment is performed, the etching treatment using the acid is performed to remove the residues or the burrs and provide micro roughness as posttreatment.

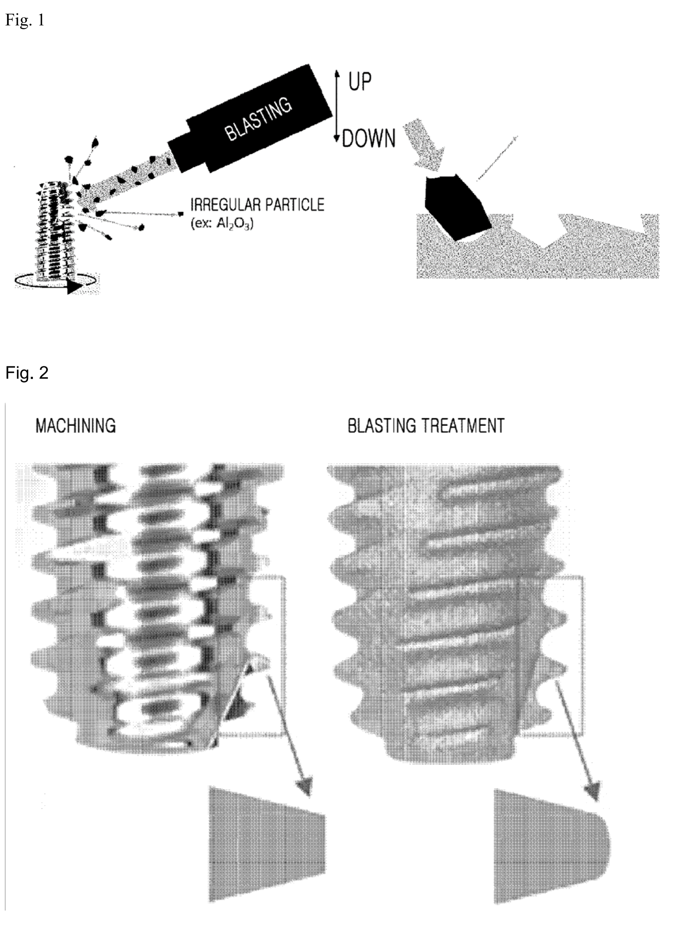

However, a method of providing the roughness by blasting the surface of the dental implant has an effect of increasing the surface area of the dental implant, but surface morphology of the implant treated by the amorphous ceramic powder sprayed at a high pressure is irregular as in an example of FIG. 1, and a design of a thread or a cutting edge in the surface of the machined dental implant may be changed as in FIG. 2.

In particular, when the surface of the dental implant has irregular surface morphology, integration deviations may occur at different parts in an osseointegration process, and the change of the design of the thread or the cutting edge in the surface of the dental implant by the blasting may apply an excessive pressure to a surrounding alveolar bone or affect a self-tapping function when the dental implant is placed.

### [Related Art Document]

(Patent Document 1) Korean Utility Model Registration No. 20-0386621 (Published on June 2, 2005)

### [Disclosure]

### [Technical Problem]

A technical problem to be solved by the present invention is to provide a dental implant surface treatment method, in which surface morphology having a regular pattern may be formed on a surface of a dental implant so that stable osseointegration performance can be performed without deviation at each part while eliminating an influence of surface treatment on a design of the dental implant, and a dental implant surface-treated by the method.

### [Technical Solution]

According to one aspect of the present invention, a method of treating a surface of a dental implant to provide roughness to the surface includes a first surface treatment operation of forming grooves having a regular pattern using a laser on an entirety or a portion of the surface of the implant and a second surface treatment operation of providing roughness to the groove and a portion around the groove through acid etching, wherein the first surface treatment operation includes a primary laser treatment process of processing a plurality of first grooves continuing in a first direction and spaced apart from each other in a second direction and a secondary laser treatment process of processing a plurality of second grooves continuing in the second direction and spaced apart from each other in the first direction and forming a crater at each intersection of the first groove and the second groove.

In an embodiment of the present invention, the first direction may be a circumferential direction of the implant, and the second direction may be a height direction of the implant, which intersects the first direction.

In the embodiment of the present invention, a width (w1) and a depth (d1) of the first groove may be the same as a width (w2) and a depth (d2) of the second groove. Preferably, the widths (w1 and w2) of the first groove and the second groove may be in a range of 5 µm to 30 µm, and the depths (d1 and d2) of the first groove and the second groove may be in a range of 5 µm to 10 µm.

In the embodiment of the present invention, a second direction separation distance D1 between one first groove and another adjacent first groove may be in a range of 5 µm to 20 µm, and a first direction separation distance D2 between one second groove and another adjacent second groove may be in a range of 5 µm to 20 µm.

In the embodiment of the present invention, in the second surface treatment operation, acid etching may be performed on the implant for 5 minutes to 10 minutes.

According to another aspect of the present invention, a dental implant placed in an alveolar bone to form an artificial tooth root includes an inner groove which is formed at a specific depth from an upper end surface of the implant and to which an abutment for supporting a crown is coupled and an outer surface on which an outer thread to place the implant in the alveolar bone is formed, wherein an entirety or a portion of the outer surface is surface-treated by the method according to the embodiment.

In another embodiment of the present invention, the outer thread may include an outer lower thread section formed at a first depth over a first height from a lower end to an upper side of the implant and an outer upper thread section formed at a second depth smaller than the first depth over a second height above the outer lower thread section, and here, the outer upper thread section may have a lower density of a crater formed through surface treatment than the outer lower thread section has.

### [Advantageous Effects]

According to a dental implant surface treatment method according to an embodiment of the present invention, roughness is provided to a surface of an implant through a precise process using a laser, and thus, in a surface treatment process for providing the roughness, a design of a thread or a cutting edge of the surface of the implant can be prevented from being unintentionally damaged or changed.

Further, when the surface of the implant is treated using a laser, the surface is additionally treated through acid etching after surface morphology of a grid pattern is formed in a primary process and a secondary process, and thus the overall surface morphology can be regular, and the surface area can be greatly increased. Thus, after placement of the implant, stable osseointegration performance without deviation at each part can be exhibited, thereby shortening a healing period.

### [Description of Drawings]

FIG. 1 is a schematic view illustrating a surface treatment process by blasting and a surface of an implant surface-treated by the blasting as a method of surface-treating an implant according to the related art.
FIG. 2 is a view for describing a problem caused by the blasting surface treatment according to the related art.
FIG. 3 is a schematic process view of a dental implant surface treatment method according to an embodiment of the present invention.
FIG. 4 is a schematic view of a laser surface treatment performed in a first surface treatment operation.
FIG. 5 is an SEM image and a schematic cross-sectional view illustrating a state of the surface of the implant that has undergone a primary surface treatment operation.
FIG. 6 is test data illustrating a rate of an increase in a surface area of the implant when the surface of the implant is treated using a laser compared to a surface area of an implant treated by a previously known implant surface treatment method (e.g., a sandblasted with alumina and acid etched (SA) method).
FIG. 7 is a graph comparing surface roughness after the surface of the implant is treated using blasting (an implant surface treatment method according to the related art), laser, and laser+acid etching (in the present invention).
FIG. 8 is a view illustrating a comparison between SEM images of the surface of the implant surface-treated by the blasting and the surface of the implant treated by a surface treatment method (laser+acid etching) according to the embodiment of the present invention.
FIG. 9 is a front view of the implant surface-treated by the surface treatment method according to the embodiment of the present invention.
FIG. 10 is a cut-away perspective view of an implant according to another embodiment of the present invention illustrated in FIG. 9.

### [Modes of the Invention]

Hereinafter, exemplary embodiments of the present invention will be described in detail with reference to the accompanying drawings.

Terms used in the specification are used only to describe specific embodiments and are not intended to limit the present invention. Singular expressions include plural expressions unless clearly otherwise indicated in the context.

In the specification, the term "including" or "having" should be understood to specify the existence of features, numbers, steps, operations, components, parts, or combinations thereof described in the specification and not to exclude, in advance, the existence or addition of one or more other features, numbers, steps, operations, components, parts, or combinations thereof.

Further, although the terms "first," "second," etc., may be used to describe various components, the components should not be limited by the terms. The terms are only used to distinguish one component from another component.

In description with reference to the accompanying drawings, the same reference numerals are assigned to the same components, and duplicated descriptions thereof will be omitted. Further, in the description of the present invention, when it is determined that a detailed description of widely-known related technologies may make the subject matter of the present invention unnecessarily unclear, the detailed description will be omitted.

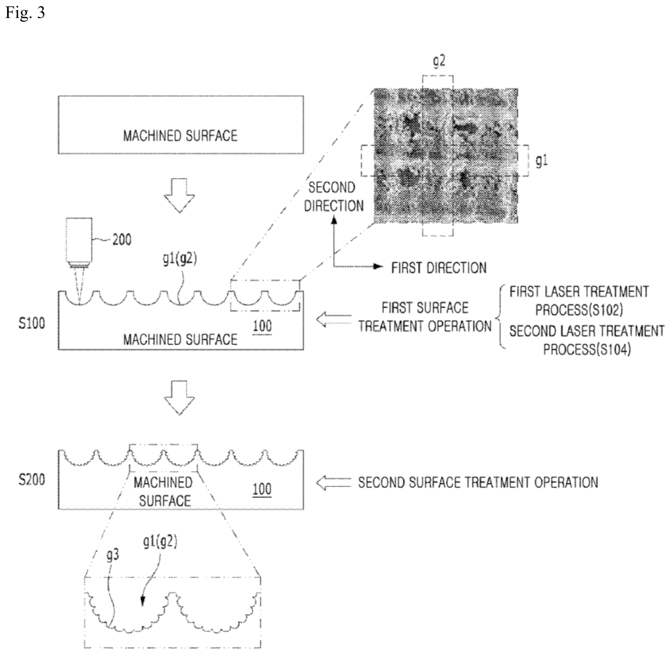

FIG. 3 is a schematic process view for describing a dental implant surface treatment method according to an embodiment of the present invention.

Referring to FIG. 3, a surface treatment method according to an embodiment of the present invention is a method of increasing a surface area by providing roughness to a surface of an implant in a regular pattern so that more improved osseointegration performance may be achieved without affecting a design of the implant that is placed in an alveolar bone and forms an artificial tooth root, and may include a first surface treatment operation S100 using a laser and a second surface treatment operation S200 using acid etching.

In the first surface treatment operation S100, an operation of forming a groove in a regular pattern using a laser may be performed on the entirety or a portion of the surface of the implant. The regular pattern may preferably be a grid pattern, and herein, the grid pattern may include any pattern in which two groups of grooves arranged in different directions intersect each other at various angles including a right angle.

The first surface treatment operation S100 may include a primary laser treatment process S102 of processing a plurality of first grooves (hereinafter, referred to as a "first groove group G1) continuing in a first direction and spaced apart from each other in a second direction and a secondary laser treatment process S104 of processing a plurality of second grooves (hereinafter, referred to as a "second group G2") continuing in the second direction and spaced apart from each other in the first direction to form a crater c at each intersection point of a first groove g1 and a second groove g2.

In the embodiment of the present invention, the first direction may be a circumferential direction of the implant, the second direction may be a height direction of the implant intersecting the first direction, but the present invention is not limited thereto. For example, the first direction may be the same as or opposite to a direction in which a thread formed on the surface of the implant is formed, and the second direction may be a direction inclined obliquely with respect to the height direction of the implant.

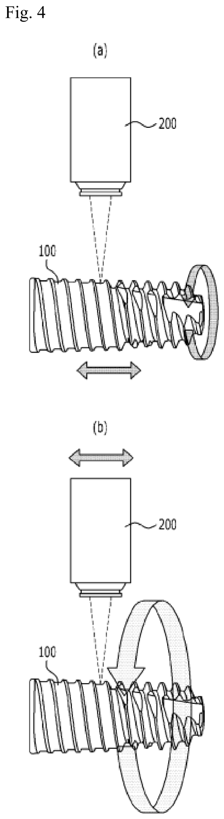

In performing primary surface treatment using a laser, in a state in which an implant 100 to be surface-treated is fitted in a rotation device (not illustrated), as illustrated in a schematic view of a surface treatment illustrated in FIG. 4A, the rotation device may be rotated or moved in the second direction with respect to a laser generator 200 (a device for radiating a laser to the implant at a set intensity) that is relatively fixed, and thus a groove of the grid pattern may be formed.

In contrast, as illustrated in a schematic view of surface treatment illustrated in FIG. 4B, in a state in which the implant 100 to be surface-treated is fixed to a fixing device (not illustrated), the laser generator 200 (a device for radiating a laser toward the implant at a set intensity) that is relatively movable may be rotated about the implant 100 fixed to the fixing device or moved in the second direction, and thus the groove may be formed in the grid pattern.

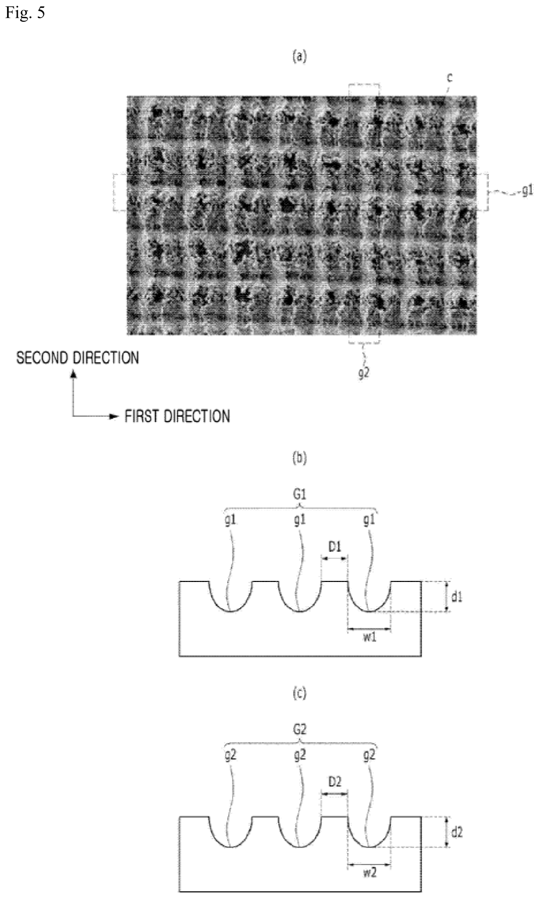

FIG. 5 is an SEM image and a schematic cross-sectional view illustrating a state of the surface of the implant that has undergone a primary surface treatment operation, and the first groove g1 and the second groove g2 may be formed in a grid pattern in which the first groove g1 and the second groove g2 intersect each other at a right angle. In this case, a width w1 of the first groove g1 and a width w2 of the second groove g2 may be the same (w1=w2), and a depth d1 of the first groove g1 and a depth d2 of the second groove g2 may also be formed to have the same depth (d1=d2).

Here, it is preferable that the width w1 of the first groove g1 and the width w2 of the second groove g2 mean average widths of the plurality of grooves g1 of the first groove group G1 and the plurality of grooves g2 of the second groove group G2, and it is preferable that the depth d1 of the first groove g1 and the depth d2 of the second groove g2 also mean average depths of the grooves g1 and g2 included in the corresponding groups.

The widths w1 and w2 of the first groove g1 and the second groove g2 may be preferably in a range of 5 µm to 30 µm. This is because when the widths w1 and w2 of the first groove g1 and the second groove g2 formed in intersecting directions are less than 5 µm, an effect of increasing the surface area is insignificant, and osseointegration characteristics may degraded, and when the widths w1 and w2 of the first groove g1 and the second groove g2 are greater than 30 µm, durability of the implant itself may be degraded.

Further, the depths d1 and d2 of the first groove g1 and the second groove g2 may be preferably in a range of 5 µm to 10 µm. When the depths d1 and d2 of the first groove g1 and the second groove g2 are less than 5 µm, an effect of increasing the surface area is insignificant, and when the depths d1 and d2 of the first groove g1 and the second groove g2 are greater than 10 µm, uniformity of a corresponding groove g3 may be degraded in forming a micro-groove g3 on surfaces of the first groove g1 and the second groove g2 through a secondary surface treatment operation thereafter.

In the embodiment of the present invention, in consideration of density of the crater c per unit area and osseointegration characteristics thereof, it is preferable that a second direction separation distance D1 between the one first groove g1 and another adjacent first groove g1 be in a range of 5 µm to 20 µm, and it is preferable that a first direction separation distance D2 between the one second groove g2 formed in a direction intersecting the first groove g1 and another adjacent second groove g2 be also in a range of 5 µm to 20 µm.

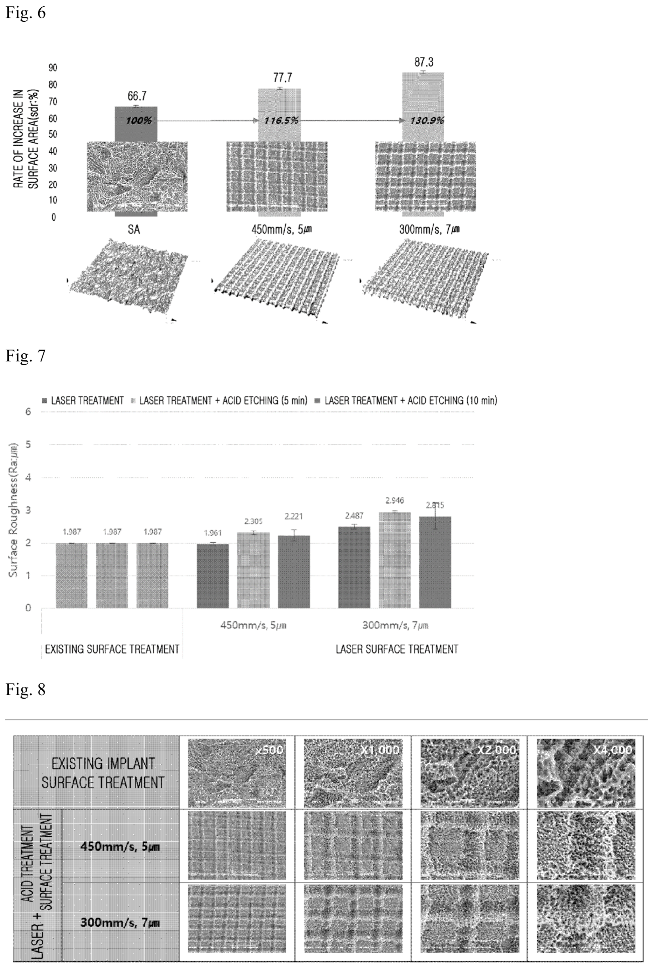

FIG. 6 is test data illustrating a rate of an increase in a surface area of the implant when the surface of the implant is treated using a laser compared to a surface area of an implant treated by a previously known implant surface treatment method (e.g., a sandblasted with alumina and acid etched (SA) method). Here, the SA method exemplified as an implant surface treatment method according to the related art is a technology of providing roughness to the surface by blasting the surface of the implant using fine alumina powders and then etching the surface of the implant using sulfuric acid or hydrochloric acid.

Referring to FIG. 6, it can be seen that, when the groove (the groove of the grid pattern) is formed in a specific pattern on the surface of the implant using a laser, the surface area is increased from as little as 1.16 times to as much as 1.3 times based on the same area compared to the sandblasted with alumina and acid etched (SA) method according to the related art.

In particular, it can be seen that, when the groove is formed at a depth of 7 µm while a laser processing speed is maintained at 300 mm/s, the surface area is increased compared to a surface area in a working condition in which the laser processing speed is 450 mm/s and a groove depth is 5 µm. Based on this test data, in the primary surface treatment operation, a working condition in which the laser processing speed is 300 mm/s and the depth of the groove is 7 µm is most preferable.

Meanwhile, a follow-up treatment in which the groove of the grid pattern is formed in the surface through laser processing, the implant to which surface roughness is primarily provided is exposed to acid, and thus the roughness is additionally provided may be performed in the second surface treatment operation S200. In the second surface treatment operation S200, micro-roughness may be additionally provided by etching using an etching solution such as sulfuric acid or hydrochloric acid.

In this way, when the surface of the primary laser processed implant is additionally treated through an additional surface treatment process (the second surface treatment operation S200) in which the implant is exposed to the etching solution such as sulfuric acid or hydrochloric acid and is etched, as in the schematic view of FIG. 3, the roughness is additionally provided to the surfaces of the grooves g1 and g2 and a part thereaaround by the micro-groove g3, and thus a coupling force (osseointegration characteristics) with a bone can be further improved.

In the second surface treatment operation S200, hydrochloric acid, sulfuric acid, phosphoric acid, nitric acid, hydrogen peroxide alone, or a mixture of two or more thereof may be used as the etching solution for acid etching, but the present invention is not limited thereto.

In the second surface treatment operation S200 according to the embodiment of the present invention, it is preferable that the acid etching be performed on the implant 100 for about 5 minutes to 10 minutes. When the acid etching is performed for less than 5 minutes, a chemical reaction time of the acid for the surface of the implant is too short, and thus the micro-groove cannot be sufficiently formed on the surface of the implant, and when the acid etching is performed for more than 10 minutes, the micro-groove may be sufficiently formed but a strength of the implant may be greatly degraded.

Of course, since an acid etching time may be varied depending on a type of the etching solution, it should be noted that the acid etching time is not limited to the above-mentioned time (5 minutes to 10 minutes).

FIG. 7 is a graph comparing surface roughness after the surface of the implant is treated using blasting (an implant surface treatment method according to the related art), laser, and laser+acid etching (in the present invention).

As illustrated in FIG. 7, it can be seen that when the surface of the implant is treated by a laser or laser+acid etching compared to the surface treatment using the blasting, the overall roughness is increased. In particular, it can be seen that, when the surface is treated by a laser+acid etching method according to the present invention compared to a case in which the surface is treated by only a laser, there is a clear effect in terms of increasing the surface roughness.

FIG. 8 is a view illustrating a comparison between SEM images of the surface of the implant treated by the blasting and the surface of the implant treated by a surface treatment method (laser+acid etching) according to the embodiment of the present invention, and it can be seen that surface morphology of the implant treated by the surface treatment method according to the present invention is regular and has much more micro grooves compared to surface morphology of the blasted implant.

According to the dental implant surface treatment method according to an embodiment of the present invention, the roughness is provided to the surface of the implant through a precise process using a laser, and thus in the surface treatment process for providing the roughness, a design of a thread or a cutting edge of the surface of the implant can be prevented from being unintentionally damaged or changed.

Further, when the surface of the implant is treated using a laser, the surface is additionally treated through acid etching after surface morphology of a grid pattern is formed in a primary process and a secondary process, and thus the overall surface morphology may be regular, and the surface area may be greatly increased. Thus, after placement of the implant, stable osseointegration performance without deviation at each part may be exhibited, thereby shortening a healing period.

Next, as another embodiment of the present invention, a configuration of the dental implant surface-treated by the surface treatment method according to the embodiment of the present invention will be briefly described.

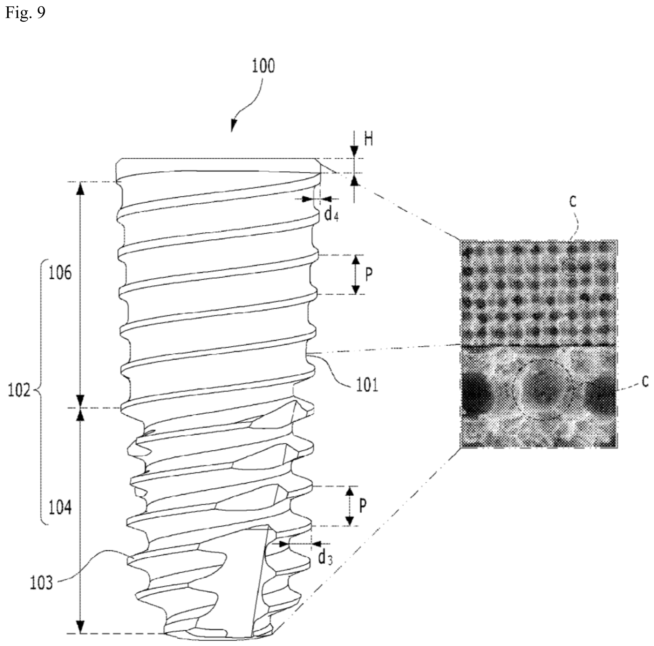

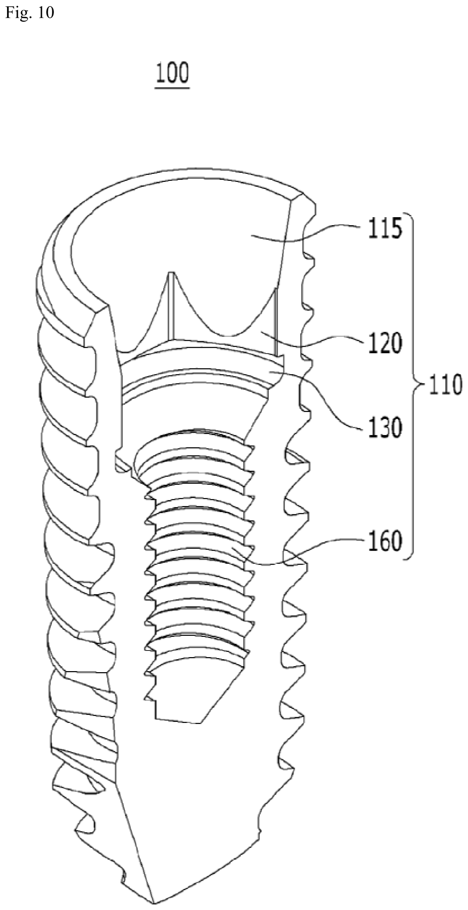

FIG. 9 is a front view of the implant surface-treated by the surface treatment method according to the embodiment of the present invention, and FIG. 10 is a cut-away perspective view of an implant according to another embodiment of the present invention illustrated in FIG. 9.

Referring to FIGS. 9 and 10, a dental implant 100 according to another embodiment of the present invention is a structure that is placed in the alveolar bone to form an artificial tooth root and may include an outer surface 101 in which an outer thread 103 is formed for placement of the alveolar bone. Here, the outer thread 103 formed in the outer surface 101 may be divided into two thread sections having the same pitch P and having different depths of valleys with respect to a height direction in the drawing.

The two thread sections constituting the outer thread 103 may be preferably divided into an outer lower thread section 104 formed at a first depth d3 over a predetermined height from a lower end of an outer circumferential surface of the implant 100 and an outer upper thread section 106 formed at a second depth d4 smaller than the first depth d3 above the outer lower thread section 104.

The two thread sections 104 and 106 having the same pitch P and the different depths of valleys may be formed through a processing operation in which two cutting bites having different processing surface shapes sequentially enter a processing target surface of a base material of the implant 100 before the thread is processed, and then the bites are moved from a lower end to an upper end while a body of the implant 100 is rotated.

In this way, when a valley depth d4 of a thread formed in the outer upper thread section 106 of the implant 100 is lower than a valley depth d3 formed in the outer lower thread section 104, a body of the implant 100 may be more firmly fixed to a dense bone area on a surface of the alveolar bone, a wall thickness of an upper area of the implant 100 may be increased to increase stiffness of the corresponding area, and thus vertical fracture occurring at an upper end of the implant 100 may also be prevented.

The outer upper thread section 106 in which the valley depth of the thread is formed to be relatively low may preferably be formed to be lowered from an upper edge of the implant 100 to a lower section by as many as 2 to 5 threads. In this case, in performing a punching process for forming a binding part having a polygonal shape or a torx shape in an inner groove 110 formed inside the implant 100, it is possible to indirectly prevent each corner of the binding part from being a starting point of fatigue failure.

A thread non-processed section H in which the thread is not processed may be formed over a predetermined section from an uppermost end to a lower side of the implant 100 in the outer upper thread section 106 among the outer threads. The thread non-processed section H may be a section provided to secure robustness for the upper end of the implant 100 in which the vertical fracture may occur.

Since no thread is formed in the thread non-processed section H, when the implant 100 is placed in the alveolar bone, the thread non-processed section H may not be inserted into the alveolar bone and may be partially exposed to an outside of an upper surface of the alveolar bone. However, since the thread non-processed section H is formed with a very small length (in a range of 0.2 mm to 0.3 mm) compared to the entire length of the body of the implant 100, when the thread non-processed section H is not placed into the alveolar bone, an effect on support stiffness of the body of the implant 100 in the alveolar bone is extremely insignificant.

In this way, when the thread non-processed section H in which the thread is not processed is formed at the upper end of the implant 100, when the implant 100 is placed in the alveolar bone, a certain level of a wall thickness is secured for the upper end of the body of the implant 100 even while a support force of the body of the implant 100 in the alveolar bone is not significantly reduced, and thus structural stiffness of the upper end of the implant 100 can be increased.

The outer surface 101 of the implant 100 according to another embodiment of the present invention may be surface-treated by the surface treatment method. Accordingly, the implant 100 may have regular surface morphology and a much increased surface area compared to the implant that is surface-treated by the blasting based on the same area according to the related art. In this case, the crater c may be formed in a state in which the outer upper thread section 106 has a lower density than the outer lower thread section 104 has.

For reference, the crater refers to a groove formed at an intersecting point as the first groove and the second groove intersect each other.

In this way, when the crater is configured in a state in which the outer lower thread section 104 has a higher density than the outer upper thread section 106 has, i.e., when the outer lower thread section 104 has a rougher surface than that of the outer upper thread section 106, a bacterial growth inhibition effect and osseointegration characteristics can be improved in a more balanced manner.

The implant 100 according to another embodiment of the present invention may also include an inner groove 110 formed in a predetermined depth from an upper surface thereof so that an abutment that supports a crown may be coupled thereto. The inner groove 110 may include an upper inclined part 115, a polygonal part 120, a boring section 130, and an inner thread part 160, and the upper inclined part 115, the polygonal part 120, the boring section 130, and the inner thread part 160 may be sequentially formed from the upper end of the implant 100.

The upper inclined part 115 may be formed at a predetermined height from an inlet of an upper end surface of the implant 100 and may have a circular cross-sectional shape and an inner diameter that is narrowed toward the lower side, and the polygonal part 120 may be formed at a predetermined height under the upper inclined part 115 and may have a cross-sectional shape having a polygonal shape (e.g., a quadrangular shape, a hexagonal shape, or an octagonal shape) or a Torx shape.

The inner thread part 160 may be formed below the polygonal part 120 at a predetermined depth. An abutment coupling thread having a diameter smaller than a circle inscribed into the polygonal shape of the polygonal part 120 may be formed in the inner screw part 160, and the boring section 130 having a circular cross-sectional shape having a diameter greater than or equal to a diameter of a circle circumscribed to the polygonal shape of the polygonal part 120 may be formed between the polygonal part 120 and the inner thread part 160.

Rotation of an abutment (not illustrated) inserted into the inner groove 110 may be prevented by the polygonal part 120, and a screw (not illustrated) for fixing the abutment to the implant 100 may be screw-coupled to the inner thread part 160. Further, when the polygonal part 120 is processed by the Boring section 130, a base material of the upper inclined part 115 that is plastically deformed by a strike of a punching tool may be pushed to a lower side of the polygonal part 120, and thus a phenomenon in which a compressive residual stress and a crack nucleus are concentrated can be prevented.

In the detailed description of the present invention, only special embodiments accordingly have been described. However, it should be understood that the present invention is not limited to particular forms mentioned in the detailed description, but rather, it should be understood that the present invention includes all modifications, equivalents, and substitutions within the spirit and scope of the present invention as defined by the appended claims.

### [Description of Reference Numerals]

100: Implant
101: Outer surface
103: Outer thread
104: Outer lower thread section
106: Outer upper thread section
110: Inner groove
g1: First groove
g2: Second groove
c: Crater

## Claims

1. A method of treating a surface of a dental implant to provide roughness to the surface, the method comprising:
a first surface treatment operation of forming grooves having a regular pattern using a laser on an entirety or a portion of the surface of the implant; and
a second surface treatment operation of providing roughness to the groove and a portion around the groove through acid etching,
wherein the first surface treatment operation includes:
a primary laser treatment process of processing a plurality of first grooves continuing in a first direction and spaced apart from each other in a second direction; and
a secondary laser treatment process of processing a plurality of second grooves continuing in the second direction and spaced apart from each other in the first direction and forming a crater at each intersection of the first groove and the second groove.

2. The method of claim 1, wherein the first direction is a circumferential direction of the implant, and
the second direction is a height direction of the implant, which intersects the first direction.

3. wherein a width (w1) and a depth (d1) of the first groove are the same as a width (w2) and a depth (d2) of the second groove.

4. The method of claim 3, wherein the widths (w1 and w2) of the first groove and the second groove are in a range of 5 µm to 30 µm, and the depths (d1 and d2) of the first groove and the second groove are in a range of 5 µm to 10 µm.

5. The method of claim 3, wherein a second direction separation distance D1 between one first groove and another adjacent first groove is in a range of 5 µm to 20 µm, and
a first direction separation distance D2 between one second groove and another adjacent second groove is in a range of 5 µm to 20 µm.

6. The method of claim 1, wherein, in the second surface treatment operation, acid etching is performed on the implant for 5 minutes to 10 minutes.

7. A dental implant placed in an alveolar bone to form an artificial tooth root, the dental implant comprising:
an inner groove which is formed at a specific depth from an upper end surface of the implant and to which an abutment for supporting a crown is coupled; and
an outer surface on which an outer thread to place the implant in the alveolar bone is formed,
wherein an entirety or a portion of the outer surface is surface-treated by the method of one of claims 1 to 6.

8. The dental implant of claim 7, wherein the outer thread includes:
an outer lower thread section formed at a first depth over a first height from a lower end to an upper side of the implant; and
an outer upper thread section formed at a second depth smaller than the first depth over a second height above the outer lower thread section.

9. The dental implant of claim 8, wherein the outer upper thread section has a lower density of a crater formed through surface treatment than the outer lower thread section has.
